Europäisches Patentamt

(19) European Patent Office

Office européen des brevets

(11) Numéro de publication: **0 028 851**

A1

## (12) DEMANDE DE BREVET EUROPEEN

(21) Numéro de dépôt: **80201006.6**

(22) Date de dépôt: **23.10.80**

(51) Int. Cl.³: **F 16 K 51/00**
F 16 K 31/528, F 16 K 17/40

(30) Priorité: **07.11.79 BE 58187**

(43) Date de publication de la demande:
**20.05.81 Bulletin 81/20**

(84) Etats Contractants Désignés:
**AT CH DE FR GB IT LI LU NL SE**

(71) Demandeur: **Race, Maurice**
**rue Sainte Anne, 3**
**B-6220 Fleurus(BE)**

(72) Inventeur: **Race, Maurice**
**rue Sainte Anne, 3**
**B-6220 Fleurus(BE)**

(74) Mandataire: **Bockstael, Daniel**
**M.F.J. Bockstael Arenbergstraat 13**
**B-2000 Anvers(BE)**

(54) **Procédé de soutirage de liquides inflammables ou dangereux à l'aide d'un robinet de sécurité.**

(57) Ce robinet est caractérisé en ce qu'une tige (11) est solidarisée, en son extrémité opposée à une soupape (3), à une poignée (12) angulairement et axialement mobile par rapport à une seconde partie (2) du corps du robinet, cette poignée comportant au moins un ergot (15) pénétrant dans une rainure de guidage (16, 17) prévue à cet effet dans ladite seconde partie (2).

Fig.1

EP 0 028 851 A1

- 1 -

<u>Procédé de soutirage de liquides inflammables ou dangereux
à l'aide d'un robinet de sécurité.</u>

Dans un brevet antérieur, le Demandeur a révélé principalement un robinet de sécurité destiné à être vissé dans l'orifice d'un fût ou sur une tuyauterie et permettant le soutirage de son contenu.

Ce robinet est principalement caractérisé en ce qu'il est réalisé en deux parties, l'une destinée à être vissée dans l'orifice d'un fût à la manière d'une bonde ou sur une tuyauterie et contenant une soupape, l'autre venant se fixer de façon amovible à ladite première partie et comportant un organe de manoeuvre de ladite soupape.

L'organe de manoeuvre est substantiellement constitué par une tige axialement déplaçable à l'aide d'un levier pivoté sur ladite deuxième partie, cette tige venant s'aligner - lorsque le robinet est assemblé - avec un doigt ou un logement prévu à cet effet sur ladite soupape.

L'assemblage des deux parties s'effectue à l'aide d'éléments de verrouillage présentant une résistance à la rupture calculée de sorte à assurer la séparation desdites parties en cas de choc.

La présente invention a pour but d'accroître encore la sécurité d'un tel robinet tout en en simplifiant la construction.

Ce but est atteint, conformément à l'invention, par un robinet du type susdécrit, comprenant une première partie destinée à être fixée dans l'orifice d'un fût, tuyauterie ou similaire et contenant une soupape rappelée en position de fermeture par un ressort, ainsi qu'une seconde partie contenant un organe de manoeuvre de ladite soupape comprenant une tige axialement déplaçable, destinée à agir par simple contact sur ladite soupape, caractérisé en ce que ladite tige est solidarisée, en son extrémité opposée à ladite soupape, à une poignée angulairement et axialement mobile par rapport à ladite seconde partie, cette poignée comportant au moins un ergot pénétrant dans une rainure de guidage prévue à cet effet dans ladite seconde partie.

Dans une forme préférée de l'invention, lesdites première et seconde parties sont réalisées sous forme d'un boîtier monobloc.

Pour plus de clarté, un exemple de réalisation de l'invention est décrit ci-après avec référence aux dessins annexés, dans lesquels :

la figure 1 est une vue latérale d'un robinet selon l'invention, avec coupe axiale partielle; et
la figure 2 est une section selon la ligne II-II de la figure 1.

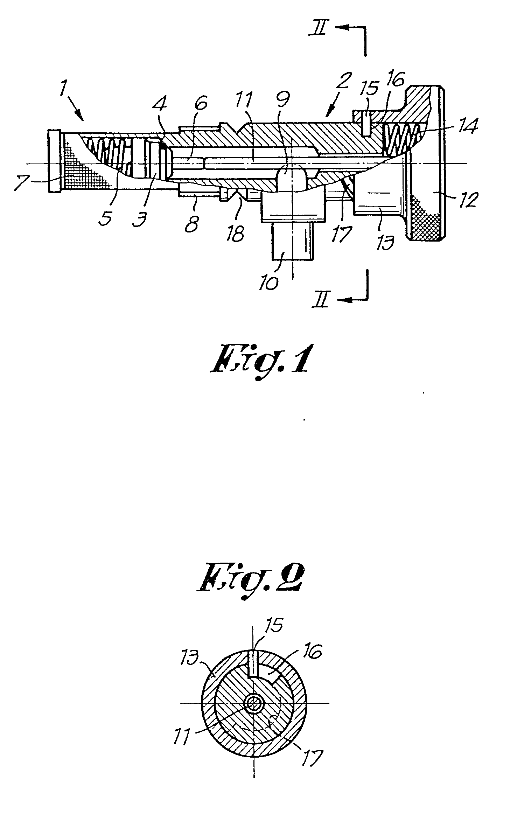

Le robinet illustré se présente sous forme d'un boîtier ou corps monobloc comportant une première partie 1 destinée à être insérée dans un fût, tuyauterie ou similaire, et une seconde partie 2 restant hors dudit fût ou tuyauterie.

La partie 1 abrite une soupape 3, normalement appliquée contre un siège 4 par un ressort 5. La soupape 3 est pourvue d'un doigt axial 6 (lequel, dans une variante d'exécution, pourrait être remplacé par un logement dans ladite soupape).

La paroi cylindrique de la partie 1 est pourvue de lumières autorisant la pénétration du fluide à soutirer dans ladite partie 1, en amont du siège 4, et est entourée d'une toile anti-feu 7.

Un filetage 8 permet de fixer l'ensemble dans l'orifice de remplissage d'un fût, d'une tuyauterie ou similaire et de l'y maintenir de façon étanche.

La seconde partie 2 contient une chambre d'écoulement de fluide 9 avec passage de sortie 10.

Une tige de manoeuvre 11 s'étend axialement dans ladite seconde partie. Cette tige est solidaire d'une poignée externe 12 pourvue d'une jupe 13 venant coiffer l'extrémité correspondante de ladite partie 2, un ressort 14 étant interposé entre cette dernière et ladite poignée.

La jupe 13 porte au moins un ergot 15 s'étendant dans une rainure de guidage prévue dans la face externe cylindrique de la partie 2. Cette rainure présente une première section 16 en arc de cercle prolongée par une section hélicoïdale 17.

Les dimensions des éléments susdécrits sont telles qu'aussi longtemps que l'ergot 15 se trouve dans ladite section 16, l'extrémité libre de la tige 11 se situe face à l'extrémité du doigt 6, sans la toucher. (Dans le cas où le doigt est remplacé par un logement, l'extrémité de la tige se situe dans l'axe de ce dernier, sans en toucher le fond).

La paroi du boîtier monobloc comporte une zone de rupture 18, dans la partie 2 et au voisinage de la fixation 8.

On remarquera la simplicité de ce robinet ainsi que sa grande sécurité.

En effet, aucun déplacement axial de la tige 11 ne peut être obtenu sans rotation préalable de la poignée 12 pour amener l'ergot 15 dans la section 17.

Si l'opérateur lâchait la poignée 12 après l'avoir tournée et enfoncée, elle reviendrait immédiatement en sa position de départ sous l'action de son ressort 14 assisté du ressort 5.

Un choc latéral sur la partie 2 entraîne la séparation de celle-ci de la partie 1, par rupture de la zone 18, avant que le fond du fût ou la paroi de la tuyauterie ne puisse être déchirée ou, le cas échéant, désertie.

Il est évident que de nombreuses modifications peuvent être apportées à l'exemple susdécrit, sans pour autant sortir du cadre de l'invention.

Ainsi les deux parties 1 et 2 pourraient, tout comme dans le brevet principal, être réalisées sous forme d'éléments séparés, mutuellement assemblables par tous moyens adéquats tels que ceux décrits dans le susdit brevet.

Revendications.

1.- Robinet de sécurité pour le soutirage de liquides contenus dans des fûts, tuyauteries ou similaires, du type comprenant une première partie (1) destinée à être fixée dans un orifice du fût ou tuyauterie et contenant une soupape (3) rappelée en position de fermeture par un ressort (5), ainsi qu'une seconde partie (2) contenant un organe de manoeuvre de ladite soupape comprenant une tige (11) axialement déplaçable, destinée à agir par simple contact sur ladite soupape (3), caractérisé en ce que ladite tige (11) est solidarisée, en son extrémité opposée à ladite soupape (3), à une poignée (12) angulairement et axialement mobile par rapport à ladite seconde partie (2), cette poignée comportant au moins un ergot (15) pénétrant dans une rainure de guidage (16, 17) prévue à cet effet dans ladite seconde partie (2).

2.- Robinet selon la revendication 1, caractérisé en ce que ladite rainure de guidage est prévue dans une partie cylindrique de ladite seconde partie (2), cette rainure comprenant une première section (16) en arc de cercle prolongée par une deuxième section (17) se rapprochant de ladite soupape (3).

3.- Robinet selon la revendication 2, caractérisé en ce qu'un ressort (14) sollicite ladite poignée (12) vers sa position axialement la plus éloignée de ladite soupape (3).

4.- Robinet selon la revendication 2, caractérisé en ce que la deuxième section (17) de la rainure est hélicoïdale.

5.- Robinet selon la revendication 1, caractérisé en ce que lesdites première et deuxième parties (1, 2) sont réalisées sous forme d'un boîtier monobloc pourvu d'une zone périphérique de rupture (18).

1/1

**Fig.1**

**Fig.2**

Office européen
des brevets

**RAPPORT DE RECHERCHE EUROPEENNE**

Numéro de la demande

EP 80 20 1006

| **DOCUMENTS CONSIDERES COMME PERTINENTS** | | | CLASSEMENT DE LA DEMANDE (Int. Cl. 3) |
|---|---|---|---|
| Catégorie | Citation du document avec indication, en cas de besoin, des parties pertinentes | Revendication concernée | |
| | <u>FR - A - 1 230 533</u> (SMIRLES)<br><br>* Page 1, colonne de droite, ligne 9 à page 2, colonne de gauche, ligne 16 *<br><br>--- | 1 | F 16 K 51/00<br>31/528<br>17/40 |
| | <u>FR - A - 1 344 906</u> (COMP. DES METAUX D'OVERPELT)<br><br>* Page 2, lignes 1-41 *<br><br>--- | 1, 2, 4 | |
| | <u>US - A - 2 529 808</u> (MARTIN)<br><br>* Colonne 2, ligne 28 à colonne 3, ligne 10 *<br><br>--- | 1 | DOMAINES TECHNIQUES RECHERCHES (Int. Cl. 3)<br><br>F 16 K 17/00<br>51/00<br>31/00<br>21/00 |
| | <u>US - A - 2 765 801</u> (SELIM)<br><br>* Colonne 3, lignes 36-56 *<br><br>--- | 5 | |
| A | <u>BE - A - 868 125</u> (RACE)<br><br>--------- | | |

CATEGORIE DES DOCUMENTS CITES

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-01-1981 | VERELST |

OEB Form 1503.1   06.78